# EUROPÄISCHE PATENTANMELDUNG

(11) **EP 1 077 359 A2**
(43) Veröffentlichungstag der Anmeldung: **21.02.2001**
(21) Anmeldenummer: 00114081.3
(22) Anmeldetag: 07.07.2000
(51) Int. Cl.: G01B 7/30

(54) **Torsionswinkel-Messaufnehmer**

(30) Priorität: 18.08.1999 DE 19939046
(71) Anmelder: Volkswagen Aktiengesellschaft, 38436 Wolfsburg (DE)
(72) Erfinder: Huk, Andre, 38110 Braunschweig (DE); Nicolai, Klaus, Dipl.-Ing., 38106 Braunschweig (DE)

(57) **Zusammenfassung**

Die Erfindung betrifft Meßaufnehmer (20) für den Torsionswinkel zwischen zwei um eine gemeinsame Achse (A) drehbaren Körpern (14, 18), insbesondere für den Torsionswinkel einer Lenksäule (10), mit:
- einem ersten Magneten (22), der an dem ersten Körper (14) befestigt ist und mit einem ersten Pol (N) in radialem Abstand zu der Achse (A) liegt;
- einem zweiten Magneten (24), der an dem zweiten Körper (18) befestigt ist und mit einem zweiten Pol (S), der entgegengesetzt zu dem ersten Pol (N) geladen ist, in radialem Abstand zu der Achse (A) liegt; und
- einem Magnetfeldsensor (34), der ebenfalls an dem zweiten Körper (18) befestigt und derart angeordnet ist, daß er das Magnetfeld, das zwischen den beiden Polen (N, S) verläuft, fühlen kann.

Dieser Torsionswinkel-Meßaufnehmer (20) benötigt lediglich drei Bauteile, nämlich zwei Magnete (22, 24) und einen Magnetfeldsensor (34), die wie beschrieben an den beiden Körpern (14, 18) befestigt sind. Er ist einfach aufgebaut und kann leicht so verwirklicht werden, daß er nur wenig Platz benötigt.

## Beschreibung

Die Erfindung betrifft einen Meßaufnehmer für den Torsionswinkel zwischen zwei um eine gemeinsame Achse drehbaren Körpern, insbesondere für den Torsionswinkel einer Lenksäule.

Aus der EP 0 566 619 B1 ist ein als Sensoreinheit bezeichneter Torsionswinkel-Meßaufnehmer bekannt, der Teil einer Hilfskraftlenkung ist, die des weiteren eine Lenksäule und einen Hilfskraftmotor umfaßt. Die Lenksäule weist einen als Eingangswellenteil bezeichneten Lenkschaft, an dem das Lenkrad angebracht ist, ein am Fußende eines Ausgangswellenteils sitzendes Lenkritzel und einen Torsions- oder Drehstab auf, der mit seinem einen Ende am Eingangswellenteil und mit seinem anderen Ende am Ausgangswellenteil befestigt ist. Die Sensoreinheit erzeugt Signale, die von der Richtung und der Größe einer Relativverschiebung zwischen dem Eingangs- und dem Ausgangswellenteil, also von dem Torsionswinkel zwischen Eingangs- und Ausgangswellenteil abhängen und dem Motor zugeleitet werden. Der Motor greift an dem Ausgangswellenteil an und dient dazu, das Lenkritzel in Abhängigkeit von den von der Sensoreinheit erzeugten Signalen anzutreiben.

Die bekannte Sensoreinheit umfaßt einen magnetischen Induktionssensor, der aus einem ringförmigen Kern aus einem magnetischen Werkstoff, einem System von elektrischen Spulen, die in dem Kern angebracht sind, und zwei Gruppen von radial verlaufenden Fahnen besteht. Der ringförmige Kern ist koaxial zu dem Eingangs- und dem Ausgangswellenteil angeordnet und weist einen ringförmigen Luftspalt auf, in dem die beiden Fahnengruppen angeordnet sind. Die eine Fahnengruppe ist an das Ausgangswellenteil und die andere Fahnengruppe an das Eingangswellenteil derart montiert, daß die Fahnen der einen Gruppe in geringem axialen Abstand zu den Fahnen der anderen Gruppe liegen. Auf den gegenüberliegenden Seiten des Luftspalts sind gegenüberliegende Sätze von ringförmigen Polen angeordnet. Das Spulensystem besteht aus drei Spulen, nämlich einer Treiberspule und zwei konzentrischen Induktions- oder Sensorspulen. Die Fahnen der einen Gruppe können mehr oder weniger mit den Fahnen der anderen Gruppe überlappen. Diese Überlappung hängt von dem Torsionswinkel zwischen Eingangs- und Ausgangswellenteil ab und beeinflußt den magnetischen Fluß zwischen der Treiberspule und den Sensorspulen. Die Sensorspulen erzeugen somit elektrische Signale, die von dem Torsionswinkel abhängen.

Ein Nachteil dieses bekannten Torsionswinkel-Meßaufnehmers liegt darin, daß er aufgrund der radial verlaufenden Fahnen viel Platz benötigt. Außerdem weist er eine große Anzahl von Bauteilen und eine komplexe Konstruktion auf.

Aufgabe der Erfindung ist es daher, einen Meßaufnehmer für den Torsionswinkel zwischen zwei um eine gemeinsame Achse drehbaren Körper zu schaffen, die einfach und platzsparend aufgebaut ist.

Diese Aufgabe wird durch einen Meßaufnehmer für den Torsionswinkel zwischen zwei um eine gemeinsame Achse drehbaren Körpern gelöst, mit:
- einem ersten Magneten, der an dem ersten Körper befestigt ist und mit einem ersten Pol in radialem Abstand zu der Achse liegt;
- einem zweiten Magneten, der an dem zweiten Körper befestigt ist und mit einem zweiten Pol, der entgegengesetzt zu dem ersten Pol geladen ist, in radialem Abstand zu der Achse liegt; und
- einem Magnetfeldsensor, der ebenfalls an dem zweiten Körper befestigt und derart angeordnet ist, daß er das Magnetfeld, das zwischen den beiden Polen verläuft, fühlen kann.

Der Torsionswinkel-Meßaufnehmer gemäß der vorliegenden Erfindung benötigt lediglich drei Bauteile, nämlich zwei Magnete und einen Magnetfeldsensor, die wie beschrieben an den beiden Körpern befestigt sind. Die Magnete sind bevorzugt Permanentmagnete, so daß der bei Elektromagneten (elektrischen Spulen) erforderliche Anschluß an eine Stromversorgung entfallen kann. Da der Magnetfeldsensor das zwischen den beiden Polen verlaufende Magnetfeld fühlt und sich die relative Position dieser beiden Pole und somit auch dieses Magnetfeld um ein bestimmtes Maß verändert, wenn der eine Körper um einen bestimmten Torsionswinkel gegen den anderen Körper um die gemeinsame Achse verdreht wird, erzeugt der Sensor ein Meßsignal, das den Torsionswinkel repräsentiert. Dieses Meßsignal kann dann in einem nachgeschalteten Meßumformer weiter verarbeitet werden, der vor allem die geometrische Beziehung zwischen den drei Komponenten erster Pol, zweiter Pol und Sensor berücksichtigt, um den Torsionswinkel zu ermitteln.

Der Torsionswinkel-Meßaufnehmer ist einfach aufgebaut und kann leicht so verwirklicht werden, daß er nur wenig Platz benötigt.

Weitere Einzelheiten und vorteilhafte Ausführungsformen der Erfindung sind Gegenstand der Unteransprüche.

In einer Ausführungsform ist vorgesehen, daß der Radialabstand des ersten Pols im wesentlichen dem Radialabstand des zweiten Pols gleicht, und daß die beiden Pole in einem axialen Abstand zueinander angeordnet sind.

Dadurch kann die Ausdehnung und somit der Platzbedarf des Aufnehmers in radialer Richtung minimiert werden.

Bei dieser Ausführungsform wird es bevorzugt, daß der Sensor axial zwischen den beiden Polen angeordnet ist.

Dadurch kann auch in axialer Richtung die Ausdehnung und somit der Platzbedarf des Aufnehmers minimiert werden. Außerdem ist in diesem Bereich, also axial zwischen den beiden Polen, das Magnetfeld am stärksten, so daß der Sensor gute Meßergebnisse liefern kann.

In einer anderen Ausführungsform ist vorgesehen, daß der Sensor unmittelbar vor oder direkt auf dem zweiten Pol angeordnet ist.

Dadurch werden zum einen der Konstruktionsaufwand und der Platzbedarf verringert und zum anderen die Meßergebnisse des Sensors optimiert, da in dem Bereich unmittelbar vor einem Pol das Magnetfeld am stärksten ist. Wenn die beiden Körper gegeneinander verdreht werden und sich hierdurch die relative Lage der beiden Pole zueinander ändert, dann bleibt zwar die Stärke des Magnetfelds in diesem polnahen Bereich nahezu unverändert. Jedoch wird bei einer solchen Verdrehung die Richtung des Magnetfelds in diesem polnahen Bereich und somit der Winkel zwischen dem Sensor und den ihn durchsetzenden Magnetfeldlinien geändert, da die Relativbewegung zwischen den beiden Polen lediglich um die gemeinsame Achse herum möglich ist. Deshalb wird bei dieser Ausführungsform bevorzugt ein Magnetfeldsensor verwendet, der ein von diesem Winkel abhängiges Meßsignal erzeugt. Beispiele hierfür sind Hall-Sensoren, also Sensoren, die Hall-Generatoren aufweisen, und magnetoresistive Sensoren, also Sensoren, die Magnetowiderstände, wie Feldplatten und dünne, ferromagnetische anisotrop magnetoresistive (abgekürzt mit AMR) Schichten, aufweisen.

In einer weiteren Ausführungsform ist vorgesehen, daß:
- eine erste Hülse an dem ersten Körper befestigt ist und den ersten Magneten derart trägt, daß der erste Pol an einem freien Ende der Hülse liegt;
- eine zweite Hülse an dem zweiten Körper befestigt ist und den zweiten Magneten derart trägt, daß der zweite Pol an einem freien Ende der Hülse liegt; und
- die beiden Hülsen koaxial zu der Achse angeordnet sind.

Mit Hilfe dieser beiden Hülsen ist es möglich, den ersten Pol beliebig nahe an den zweiten Pol zu bringen, auch wenn die beiden Körper weiter voneinander entfernt sind. Wenn beispielsweise die Verdrehung einer Welle gemessen werden soll, um das an dieser Welle angreifende Drehmoment zu ermitteln, dann kann dies dadurch erfolgen, daß der Torsionswinkel zwischen zwei in axialem Abstand zueinander liegenden Abschnitten der Welle gemessen und mit der Torsionsfedersteifigkeit des zwischen diesen beiden Wellenabschnitten liegenden Wellenstücks multipliziert wird. In diesem Fall wird die erste Hülse, die an ihrem freien Ende den ersten Pol trägt, mit ihrem anderen Ende an dem ersten Wellenabschnitt befestigt, während die zweite Hülse entsprechend an dem zweiten Wellenabschnitt befestigt wird. Jede Hülse weist dabei mit ihrem freien Ende zu der anderen Hülse hin, so daß der Abstand zwischen den beiden freien Hülsenenden und somit auch der Abstand zwischen den beiden Polen kleiner als der Abstand zwischen den beiden Wellenabschnitten ist.

In einer anderen Ausführungsform ist vorgesehen, daß:
- die beiden Magnete Ringmagnete sind, die koaxial zu der Achse angeordnet sind;
- ein erster Polschuh auf dem ersten Pol und ein zweiter Polschuh auf dem zweiten Pol angeordnet ist, wobei jeder Polschuh wenigstens einen Zahn aufweist, der zu dem jeweils anderen Pol hin vorspringt; und
- jeweils ein Sensor unmittelbar vor oder direkt auf jedem Zahn des zweiten Polschuhs angeordnet ist.

Diese Ringmagnete sind vor allem für die Befestigung an den freien Enden von Hülsen geeignet, wie sie zuvor beschrieben wurden. Mit Hilfe der Polschuhe wird das Magnetfeld der Ringmagnete in die Zähne geleitet und dort gebündelt und somit verstärkt.

Bei dieser Ausführungsform wird es bevorzugt, daß jeder Polschuh zu seinem Ringmagneten passend ringförmig ausgebildet und koaxial zu diesem angeordnet ist. Wenn zudem die beiden Polschuhe im wesentlichen den gleichen Durchmesser aufweisen, dann wird es bevorzugt, daß sie in einem axialen Abstand einander gegenüber liegen. Dann ist es auch von Vorteil, wenn sich die Zähne im wesentlichen in axialer Richtung erstrecken. Wenn hingegen die beiden Polschuhe unterschiedliche Durchmesser aufweisen, dann wird es bevorzugt, daß sie im wesentlichen ohne axialen, aber in einem radialen Abstand einander gegenüberliegen. Dann ist es auch von Vorteil, wenn sich die Zähne im wesentlichen in radialer Richtung erstrecken.

Es kann vorgesehen sein, daß die beiden Polschuhe die gleiche Anzahl an Zähnen aufweisen, und daß bei jedem Polschuh die Zähne in gleichen Winkelabständen um die Achse herum verteilt sind. Hierdurch wird Redundanz unter den Sensoren erreicht, die den Zähnen des zweiten Polschuhs zugeordnet sind.

Es kann aber auch vorgesehen sein, daß die Anzahl an Zähnen des ersten Polschuhs sich, vorzugsweise um eins, von der Anzahl an Zähnen des zweiten Polschuhs unterscheidet, und daß bei jedem Polschuh die Zähne in gleichen Winkelabständen um die Achse herum verteilt sind. Hierdurch wird das Nonius-Prinzip verwirklicht, wodurch die Meßgenauigkeit des Winkelmeßaufnehmers verbessert wird.

Der Sensor kann wenigstens einen Hall-Generator und/oder wenigstens einen Magnetowiderstand, der beispielsweise eine Feldplatte oder eine anisotrop magnetoresistive Dünnschicht aufweisen kann, umfassen.

Eine bevorzugte Anwendung des Winkelmeßaufnehmers der vorliegenden Erfindung ist eine Lenksäule mit einem Lenkschaft zur Befestigung an einem Lenkrad und einem Lenkritzel, das mit dem Lenkschaft verbunden ist. Derartige Lenksäulen können Teil einer Hilfskraftlenkung sein, die des weiteren einen Hilfskraftmotor umfaßt, der das Lenkritzel antreibt. Der Motor wird dabei in Abhängigkeit von dem Drehmoment angesteuert, das einerseits vom Fahrer über das Lenkrad und andererseits von den gelenkten Rädern über das Lenkritzel auf die Lenksäule ausgeübt wird. Zur Ermittlung dieses Drehmoments wird der Torsionswinkel zwischen Lenkschaft und Lenkritzel gemessen, die aufgrund des Drehmoments gegeneinander verdreht sind. Für die Bestimmung dieses Torsionswinkels der Lenksäule wird vorteilhafterweise der Meßaufnehmer für den Torsionswinkel zwischen zwei um eine gemeinsame Achse drehbare Körper verwendet, wobei dann der erste Körper dem Lenkschaft und der zweite Körper dem Lenkritzel entspricht.

Der Lenkschaft ist bevorzugt über eine Torsionsfeder, die beispielsweise ein Drehstab ist, mit dem Lenkritzel verbunden.

Im folgenden werden bevorzugte Ausführungsbeispiele der vorliegenden Erfindung anhand der beigefügten Zeichnungen näher beschrieben.
- FIG. 1: zeigt im Längsschnitt eine schematische Darstellung einer Lenksäule für eine Hilfskraftlenkung, die mit einem Meßaufnehmer für den Torsionswinkel der Lenksäule ausgerüstet ist;
- FIG. 2: ist ein Querschnitt längs der Linie II-II der FIG. 1;
- FIG. 3 und FIG. 4: sind Prinzipskizzen, die zwei verschiedene Varianten der Anordnung eines Magnetfeldsensors im Verhältnis zu dem Magnetfeld in dem Winkelmeßaufnehmer darstellen; und
- FIG. 5: ist eine Prinzipskizze, die in Draufsicht die Anordnung der Zähne der beiden Polschuhe des Winkelmeßaufnehmers gemäß dem Nonius-Prinzip darstellt.

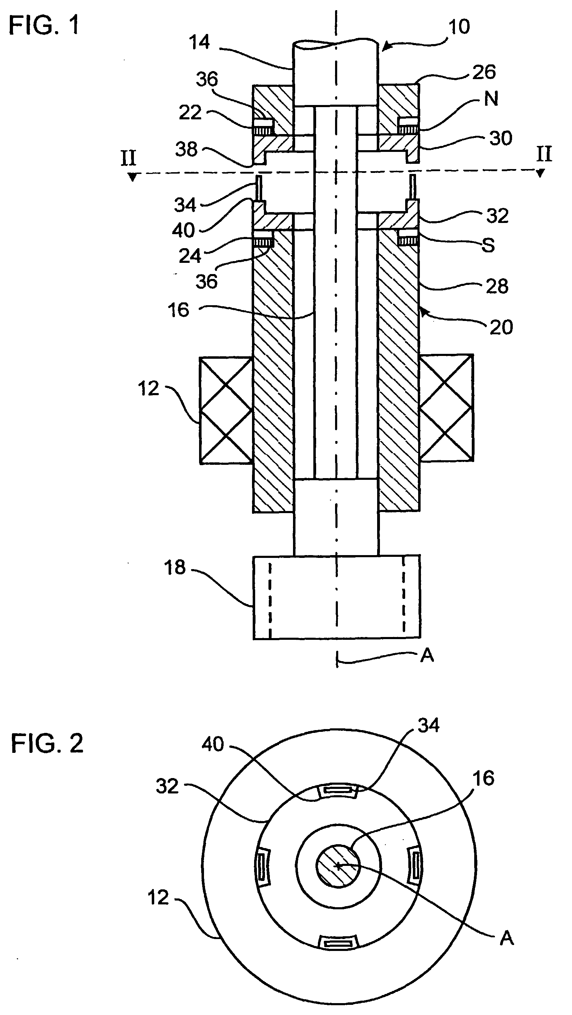

Die FIG. 1 und 2 zeigen eine Lenksäule 10 und einen Hilfskraftmotor 12, die Teil einer Hilfskraftlenkung sind. Die Lenksäule 10 weist einen Lenkschaft 14, einen Drehstab 16, ein Lenkritzel 18 und einen Torsionswinkel-Meßaufnehmer 20 auf. Der Lenkschaft 14 wird an seinem (nicht dargestellten) oberen Ende mit einem Lenkrad verbunden. An dem unteren Ende des Lenkschafts 14 ist das obere Ende des Drehstabs 16 befestigt, der wiederum mit seinem unteren Ende an dem oberen Ende des Lenkritzels 18 befestigt ist. Lenkschaft 14, Drehstab 16 und Lenkritzel 18 sind koaxial zu einer gemeinsamen Drehachse A angeordnet.

Der Meßaufnehmer 20 ist ebenfalls koaxial zur Achse A angeordnet und weist zwei Ringmagnete 22, 24, zwei Hülsen 26, 28, zwei Polschuhe 30, 32 und vier Magnetfeldsensoren 34 auf. Die beiden Ringmagnete 22, 24 sind parallel zur gemeinsamen Achse A polarisiert und zueinander derart ausgerichtet, daß jeweils der eine Pol (hier der Nordpol) zum Lenkritzel 18 (in der FIG. 1 also nach unten) weist und der andere Pol (hier also der Südpol) in die entgegengesetzte Richtung (in der FIG. 1 also nach oben) weist.

Der erste Ringmagnet 22 ist mit Hilfe der ersten Hülse 26 an dem Lenkschaft 14 befestigt, wohingegen der zweite Ringmagnet 24 mit Hilfe der zweiten Hülse 28 an dem Lenkritzel 18 befestigt ist. Im folgenden wird derjenige Pol des ersten Magneten 22, der zum zweiten Magneten 24 weist (hier also der Nordpol), als erster Pol N bezeichnet, während derjenige Pol des zweiten Magneten 24, der zum ersten Magneten 22 weist (hier also der Südpol), als zweiter Pol S bezeichnet wird.

Die beiden Hülsen 26, 28 weisen im wesentlichen die Form von Rohren mit kreisringförmigem Querschnitt auf. Die erste Hülse 26 ist mit ihrem in der FIG. 1 oberen Ende auf das untere Ende des Lenkschafts 14 aufgeschoben und an diesem befestigt. Das Lenkritzel 18 wird an seiner oberen Stirnfläche durch einen nach oben vorspringenden Wellenstumpf fortgesetzt, und die zweite Hülse 28 ist mit ihrem unteren Ende auf diesen Wellenstumpf aufgeschoben und daran befestigt. Der Drehstab 16 erstreckt sich im Inneren der beiden Hülsen 26, 28, ohne diese zu berühren, zwischen dem Lenkschaft 14 und dem Lenkritzel 18.

Die axialen Längen der beiden Hülsen 26, 28 sind so gewählt, daß ihre freien Enden, also das untere Ende der ersten Hülse 26 und das obere Ende der zweiten Hülse 28, in einem axialen Abstand zueinander liegen. Jede Hülse 26, 28 weist an ihrem freien Ende eine umlaufende Ringnut 36 auf, die koaxial zur Achse A liegt und in der entsprechenden Stirnfläche mündet. Jede Ringnut 36 nimmt einen der beiden Ringmagnete 22, 24 auf, und ihre Tiefe ist so bemessen, daß die beiden zueinander weisenden Stirnflächen der beiden Ringmagnete 22, 24 (also die Polflächen des ersten Pols N und des zweiten Pol S) jeweils flächenbündig mit der Stirnfläche der zugeordneten Hülse 26, 28 sind oder geringfügig von dieser vorspringen.

Jeder Polschuh 30, 32 weist im wesentlichen die Form eines Kreisringes auf. Der erste Polschuh 30 liegt mit seiner oberen Stirnfläche plan auf dem ersten Pol N auf und ist an dem freien Ende der ersten Hülse 26 angebracht, so daß der erste Magnet 22 in der Ringnut 36 zwischen dem ersten Polschuh 30 und der ersten Hülse 26 gehalten wird. Der zweite Ringmagnet 24 wird, ähnlich wie der erste Ringmagnet 22, zwischen der unteren Stirnfläche des zweiten Polschuhs 32, die plan auf dem zweiten Pol S liegt, und der zweiten Hülse 28 in deren Ringnut 36 gehalten. Jeder Polschuh 30, 32 weist auf seiner freien Stirnfläche vier Zähne 38, 40 auf, wobei sich die (ersten) Zähne 38 des ersten Polschuhs 30 axial nach unten und die (zweiten) Zähne 40 des zweiten Polschuhs 32 axial nach oben erstrecken. Die vier ersten Zähne 38 und die vier zweiten Zähne 40 sind jeweils in gleichen Winkelabständen (hier also von 90°) und in gleichem radialem Abstand um die Achse A herum angeordnet.

Die Hülsen 26, 28 sind aus einem unmagnetischen Werkstoff, wie zum Beispiel Aluminium, Messing oder Kunststoff, während die Polschuhe 30, 32 aus einem weichmagnetischen Material bestehen. Dadurch wird vermieden, daß ein Magnet 22, 24 über seine Hülse 26, 28 magnetisch kurzgeschlossen wird, so daß die Magnetfeldlinien, die von dem ersten Pol N bzw. zweiten Pol S ausgehen, in dem entsprechenden ersten Polschuh 30 bzw. zweiten Polschuh 32 gebündelt werden und von diesem in die Umgebung austreten.

Da die Polschuhe 30, 32 großflächig an den beiden Polen N, S anliegen und in ihren Zähnen 38, 40 auslaufen, deren freie Stirnfläche sehr viel kleiner als die ringförmige Polfläche der beiden Pole N, S ist und in axialer Richtung am weitesten von diesen entfernt liegt, werden die Magnetfeldlinien, die von dem ersten Pol N zu dem zweiten Pol S verlaufen, in den ersten und zweiten Zähnen 38, 40 gebündelt. Dadurch ist das Magnetfeld B in dem Luftspalt zwischen den beiden Polschuhen 30, 32 unmittelbar vor den Zähnen 38, 40 besonders stark.

Auf jedem der zweiten Zähne 40 ist ein Magnetfeldsensor 34 angebracht. Jeder Sensor 34 fühlt das Magnetfeld B, das zwischen dem zugeordneten zweiten Zahn 40 und dem nächstliegenden ersten Zahn 38 verläuft. Da zum einen die Sensoren 34 und der zweite Polschuh 32 mit den zweiten Zähnen 40 über die zweite Hülse 28 drehfest an dem Lenkritzel 18 und zum anderen der erste Polschuh 30 mit den ersten Zähnen 38 über die erste Hülse 26 drehfest an dem Lenkschaft 14 angebracht sind, wird, wenn der Lenkschaft 14 relativ zu dem Lenkritzel 18 gegen die Torsionskraft des Drehstabs 16 um die gemeinsame Achse A herum verdreht wird, auch der erste Polschuh 30 mit den ersten Zähnen 38 relativ zu dem zweiten Polschuh 32 mit den zweiten Zähnen 40 um die gemeinsame Achse A herum gedreht. Durch diese Drehung ändern sich auch auf charakteristische Weise die Magnetfelder B zwischen jeweils einem ersten Zahn 38 und einem zweiten Zahn 40. Der auf dem entsprechenden zweiten Zahn 40 sitzende Magnetfeldsensor 34 erfaßt diese Magnetfeldänderung und erzeugt ein diese repräsentierendes Meßsignal, das folglich für die Verdrehung und den Torsionswinkel zwischen Lenkschaft 14 und Lenkritzel 18 charakteristisch ist.

Die Meßsignale der Sensoren 34 werden einem nicht dargestellten Meßumformer zugeführt, der aus ihnen Steuersignale erzeugt, die dem Hilfskraftmotor 12 zugeführt werden, um diesen in Abhängigkeit von dem Drehmoment, das zu der Verdrehung geführt hat, anzusteuern. In der FIG. 1 ist der Motor lediglich andeutungsweise durch das Bauteil 12 dargestellt, das beispielsweise der Rotor eines Elektromotors sein kann, der an der äußeren Umfangsfläche der zweiten Hülse 28 angreift und über diese das Lenkritzel 18 antreibt.

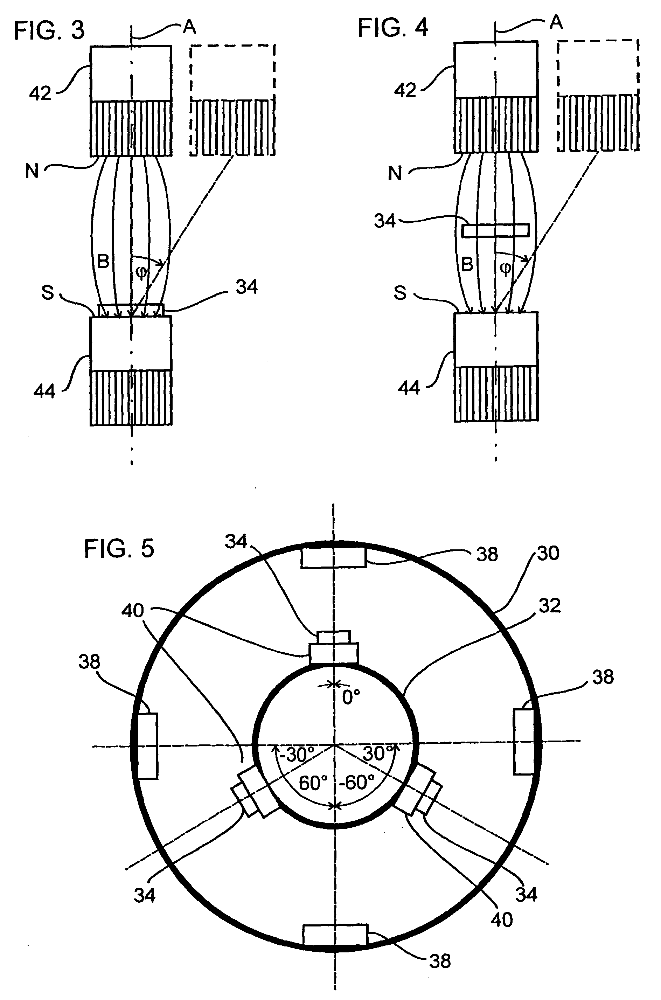

Anhand der FIG. 3 und 4 werden im folgenden zwei grundlegende Meßprinzipien zur Bestimmung des Torsionswinkels aus der zugehörigen Magnetfeldänderung erläutert, wobei auch Kombinationen dieser beiden Prinzipien denkbar sind. Zur Vereinfachung der Darstellung und zur Veranschaulichung einer besonders einfach aufgebauten Ausführungsform des Torsionswinkel-Meßaufnehmers 20 sind die Ringmagnete 22, 24 und die Polschuhe 30, 32 mit ihren Zähnen 38, 40 durch zwei Stabmagnete 42, 44 ersetzt, die in radialem Abstand parallel zur Achse A liegen und an dem (hier nicht dargestellten) Lenkschaft 14 bzw. dem (hier ebenfalls nicht dargestellten) Lenkritzel 18 angebracht sind. Der erste Pol N und der zweite Pol S sind hier also der untere Pol des oberen Stabmagneten 42 bzw. der obere Pol des unteren Stabmagneten 44.

In der FIG. 3 ist die Anordnung des Magnetfeldsensors 34 relativ zu dem Magnetfeld B zwischen dem ihm zugeordneten zweiten Pol S und dem gegenüberliegenden ersten Pol N prinzipiell dargestellt, wobei diese Anordnung auch bei dem in den FIG. 1 und 2 gezeigten Meßaufnehmer 20 verwendet wird, dort jeweils analog übertragen auf einen zweiten Zahn 40 mit dem ihm zugeordneten Sensor 34 und den gegenüberliegenden ersten Zahn 38. In dieser ersten Variante wird für die Messung des Torsionswinkels die Richtung des Magnetfelds B herangezogen, das den Sensor 34 unmittelbar vor dem zweiten Pol S durchsetzt. Die FIG. 3 zeigt einen Blick in radialer Richtung auf die Stabmagnete 42, 44 und die dahinter liegende Achse A, so daß in dieser Ansicht der erste Pol N nach rechts wandert, wenn er (bzw. der nicht dargestellte Lenkschaft) bei Blick von oben auf die Achse A im Gegenuhrzeigersinn um die Achse A gedreht und der zweite Pol S als feststehend betrachtet wird. Die Position des ersten Pols N nach einer derartigen Drehung ist durch eine gestrichelte Linie angedeutet. Es ist zu erkennen, daß in der Ausgangsposition das Magnetfeld B den Sensor 34 im wesentlichen parallel zur Achse A durchsetzt, jedoch in der verdrehten Endposition unter einem Winkel ϕ relativ zur Achse A. Dieser Winkel ϕ steht in fester geometrischer Relation zu dem Torsionswinkel, in die der axiale Abstand zwischen den beiden Polen N, S und ihr radialer Abstand von der Achse A als Konstanten eingehen. Der Magnetfeldsensor 34 muß also hier in der Lage sein, die Richtung des Magnetfelds, das ihn durchsetzt, bestimmen zu können. Derartige Magnetfeldsensoren sind im Stand der Technik bekannt und umfassen beispielsweise Hall-Sensoren und magnetoresistive Sensoren.

Falls der Magnetfeldsensor 34 ein Hall-Sensor ist und dieser beispielsweise flach auf dem zweiten Pol S liegt, dann ist die abgreifbare Hall-Spannung am größten, wenn das Magnetfeld B senkrecht durch den Hall-Sensor 34 hindurchgeht, wie es in der Ausgangsposition der FIG. 3 der Fall ist. Sobald das Magnetfeld B seine Richtung ändert, sinkt auch die Hall-Spannung, und da die Stärke des Magnetfelds B direkt vor dem zweiten Pol S auch dann nahezu unverändert bleibt, wenn sich seine Richtung ändert, hängt die Hall-Spannung nahezu ausschließlich von der Richtungsänderung des Magnetfelds ab. An dieser Stelle soll darauf hingewiesen werden, daß bei dem geschilderten Anwendungsfall des Winkelmeßaufnehmers 20 in einer Lenksäule 10 für eine Hilfskraftlenkung der Torsionswinkel zwischen Lenkschaft 14 und Lenkritzel 18 in der Regel zwischen -5° und +5° liegt, so daß auch der Winkel ϕ, der die Richtung des Magnetfelds B relativ zur Achse A beschreibt, dadurch für eine gute Näherungsbetrachtung ausreichend klein gehalten werden kann, daß die beiden bereits erwähnten Parameter, nämlich der axiale Abstand zwischen den beiden Polen N, S und ihr radialer Abstand von der Achse A, geeignet gewählt werden.

Bei der geschilderten Anordnung des Hall-Sensors 34 ist das Meßsignal, also die Hall-Spannung, unabhängig davon, ob der erste Pol N aus der Ausgangsposition um den Winkel ϕ nach rechts in der FIG. 3 in die gezeigte Endposition oder aber in die entgegengesetzte Richtung nach links um den Winkel -ϕ bewegt wird. Um daher aus dem Meßsignal dieses einen Sensors 34 auch den Richtungssinn der Verdrehung bzw. die Richtung, in die das Lenkrad bzw. der Lenkschaft 14 gedreht wird, entnehmen zu können, sind die beiden Pole N, S (bzw. bei der in den FIG. 1 und 2 dargestellten Ausführungsform die zugehörigen ersten und zweiten Zähne 38, 40) in der Nullposition der Lenksäule, in der kein Drehmoment auf den Drehstab 16 wirkt und Lenkschaft 14 und Lenkritzel 18 nicht gegeneinander verdreht sind, derart versetzt zueinander angeordnet (vgl. die Endposition in der FIG. 3), daß bei einer Verdrehung in die eine Richtung der Winkel ϕ zunimmt und dadurch die Hall-Spannung abnimmt und bei Verdrehung in entgegengesetzte Richtung der Winkel ϕ abnimmt und dadurch die Hall-Spannung zunimmt. Dadurch wird eine eindeutige Zuordnung zwischen Verdrehwinkel und Richtungssinn einerseits und dem Meßsignal (Hall-Spannung) andererseits erreicht.

Der Magnetfeldsensor 34 kann auch ein magnetoresistiver Sensor sein und beispielsweise eine Feldplatte oder eine anisotrop magnetoresistive Dünnschicht aufweisen. Im letztgenannten Fall wird der Sensor dann auch als AMR-Sensor (AMR ist die Abkürzung für anisotrop magnetoresistiv) bezeichnet. Bei magnetoresistiven Sensoren ändert sich ihr elektrischer Widerstand in Abhängigkeit von derjenigen Magnetfeldkomponente, die in der Ebene des Sensors und rechtwinklig zu dem Strom liegt, der durch d en Sensor geleitet wird. Daher sollte ein derartiger Sensor nicht, wie es bei dem Hall-Sensor zuvor beschrieben wurde, flach auf dem zweiten Pol S aufliegen, sondern hochkant auf diesem stehen, wobei die Flächennormale der Sensorfläche möglichst rechtwinklig zu der Achse A verlaufen sollte. Diese Ausrichtung ist in den FIG. 1 und 2 dargestellt.

Wenn der in der FIG. 3 schematisch dargestellte Sensor 34 ein derart ausgerichteter magnetoresistiver Sensor ist und eine elektrische Spannung links und rechts an den Sensor 34 angelegt wird, dann ist sein elektrischer Widerstand am größten, wenn das Magnetfeld B parallel zur Achse A verläuft (ϕ = 0). Wenn der erste Pol N sich aufgrund einer Verdrehung nach links oder rechts bewegt, dann ändert sich entsprechend die Richtung des Magnetfelds B, das den Sensor 34 durchsetzt, so daß dessen elektrischer Widerstand entsprechend sinkt. Auch hier kann durch eine geeignete Versetzung des ersten Pols N zum zweiten Pol S in der Nullposition der Lenksäule, wie sie zuvor im Zusammenhang mit dem Hall-Sensor beschrieben wurde, zu einer eindeutigen Relation zwischen Meßsignal (elektrischer Widerstand des Sensors bzw. elektrischer Strom durch den Sensor 34 bei bekannter elektrischer Spannung) einerseits und andererseits Torsionswinkel und Richtungssinn der Verdrehung erzielt werden.

In der FIG. 4 ist eine zweite Variante der Anordnung des Magnetfeldsensors 34 relativ zu den beiden Polen N, S und dem Magnetfeld B prinzipiell dargestellt, die für das erwähnte zweite Meßprinzip besonders günstig ist. Bei dieser Variante ist der Sensor 34 nicht direkt vor dem zweiten Pol S angeordnet, sondern ungefähr auf halber axialer Strecke zwischen den beiden Polen N, S. Es wird jedoch darauf hingewiesen, daß der Sensor 34 nach wie vor drehfest mit dem zweiten Pol S verbunden ist und deshalb zusammen mit ihm gedreht wird. Auch in der FIG. 4, die wie die FIG. (3) einen Blick in radialer Richtung auf die Stabmagnete 42, 44 und die dahinter liegende Achse A zeigt, sind eine Ausgangsposition, in der die Verbindungslinie zwischen den beiden Polen N, S parallel zu der gemeinsamen Achse A liegt, und eine Endposition (in gestrichelter Linie angedeutet) dargestellt, in der eine Verdrehung der Lenksäule in Gegenuhrzeigersinn um die Achse A dazu geführt hat, daß der erste Pol N nach rechts gewandert ist und die Verbindungslinie, die die gemittelte Richtung des Magnetfelds B zwischen den beiden Polen N, S angibt, im Winkel ϕ relativ zur Achse A steht. Es ist zu erkennen, daß das Magnetfeld B, das den Sensor 34 durchsetzt, in der Ausgangsposition stärker ist als in der Endposition. Wenn der Sensor 34 daher in der Lage ist, ein Meßsignal zu erzeugen, das von der Stärke des ihn durchsetzenden Magnetfelds B abhängt, dann ist dieses Meßsignal auch abhängig von dem Winkel ϕ und somit von dem Torsionswinkel. Bei dieser Variante wird also nicht die Richtung des Magnetfelds B, das den Sensor 34 durchsetzt, für die Messung des Torsionswinkels verwendet, sondern seine Stärke. Im Stand der Technik sind Sensoren für die Magnetfeldstärke bekannt. Auch hier kann die zuvor im Zusammenhang mit der ersten Variante beschriebene Versetzung in der Nullposition der Lenksäule sinnvoll sein, um aus dem Meßsignal auch Informationen über den Richtungssinn der Verdrehung zu erhalten.

Die FIG. 1 und 2 zeigen eine Ausführungsform des Winkelmeßaufnehmers 20, in der zum einen die Anzahl der ersten Zähne 38 gleich der Anzahl der zweiten Zähne 40 ist und zum anderen die ersten Zähne 38 und die zweiten Zähne 40 bei gleichen radialen Abmessungen und Positionen in axialem Abstand zueinander liegen, so daß sich die Magnetfelder B zwischen jeweils einem ersten Zahn 38 und dem ihm zugeordneten zweiten Zahn 40 im wesentlichen in axialer Richtung erstrecken. Die gleiche Anzahl an ersten Zähnen 38 und an zweiten Zähnen 40 und Sensoren 34 führt dazu, daß die Sensoren 34 redundante Meßsignale liefern können.

Es ist jedoch zum einen auch möglich, für die ersten Zähne 38 eine Anzahl zu wählen, die sich von der Anzahl der zweiten Zähne 40 und Sensoren 34 unterscheidet. Dadurch kann ein Nonius-Prinzip verwirklicht werden, das eine genauere Bestimmung des Torsionswinkels ermöglicht. Zum anderen kann - unabhängig von dieser Variante - die Anordnung der Zähne 38, 40 dahingehend geändert werden, daß die radialen Abmessungen und Positionen der ersten Zähne 38 sich von den radialen Abmessungen und Positionen der zweiten Zähne 38 unterscheiden, so daß sich die Magnetfelder B zwischen den Zähnen 38, 40 unter einem dementsprechenden Winkel zu der Achse A erstrecken. Dieser Winkel kann sogar 90° betragen, so daß sich diese Magnetfelder B im wesentlichen in radialer Richtung zu der Achse A erstrecken.

Die FIG. 5 zeigt schematisch eine zweite Ausführungsform des Winkelmeßaufnehmers 20, in der im Vergleich zu der Ausführungsform der FIG. 1 und 2 diese beiden soeben genannten Varianten verwirklicht sind. Die FIG. 5 ist eine Draufsicht auf die Radialebene, in der die ersten Zähne 38, die zweiten Zähne 40 und die Sensoren 34 gemeinsam liegen. Die ersten und zweiten Zähne 38, 40 liegen somit nicht mehr in einem axialen Abstand zueinander, sondern in einem radialen Abstand. Der (hier durch einen Kreis angedeutete) erste Polschuh 30 hat einen größeren Radius als der (hier ebenfalls durch einen Kreis angedeutete) zweite Polschuh 32. Der erste Polschuh 30 weist wie in den FIG. 1 und 2 vier erste Zähne 38 auf, die in gleichen Winkelabständen von 90° um die Achse 1 herum angeordnet sind. Der zweite Polschuh 32 weist hingegen nur drei zweite Zähne 40 auf, die ebenfalls in gleichen Winkelabständen, deren Wert aber nun 120° beträgt, um die Achse A herum angeordnet sind. Der radiale Abstand der ersten Zähne 38 von der Achse A ist somit größer als der radiale Abstand der zweiten Zähne 40. Der erste Polschuh 30 ist ein Ring, von dessen inneren Umfangsfläche die ersten Zähne 38 radial nach innen, also zur Achse A hin, vorspringen. Der zweite Polschuh 32 ist ebenfalls ein Ring, von dessen äußerer Umfangsfläche die zweiten Zähne 40 radial nach außen, also von der Achse A weg, vorspringen. Wie schon bei der Ausführungsform der FIG. 1 und 2, befinden sich hier die Sensoren 34 auf den freien Stirnflächen der zweiten Zähne 40, wobei aber diese freien Stirnflächen nun radial von der Achse A weg gerichtet sind. Die Magnetfelder B zwischen ersten und zweiten Zähnen 38, 40 erstrecken sich im wesentlichen in der dargestellten Radialebene.

Ausgehend von der in der FIG. 5 dargestellten Ausgangsposition läßt sich das NoniusPrinzip wie folgt erklären. In dieser Ausgangsposition liegen der erste Zahn 38 und der zweite Zahn 40 mit seinem Sensor 34, die sich in der FIG. 5 ganz oben befinden, auf einer radialen Linie durch die Achse A hindurch. Im folgenden wird für die Angabe von Winkeln um die Achse A herum der mathematisch positive Richtungssinn (oder Gegenuhrzeigersinn) in der FIG. 5 verwendet. Die beiden genannten oberen Zähne 38, 40 liegen daher in einem Winkelabstand von 0° (= 90° - 90°) zueinander. Der Winkelabstand zwischen dem in der FIG. 5 ganz rechts befindlichen zweiten Zahn 40 und dem ebenfalls ganz rechts befindlichen ersten Zahn 38 beträgt somit 30° ( = 360° -330°), während der Winkelabstand zwischen diesem rechten zweiten Zahn 40 und dem in der FIG. 5 ganz unten befindlichen ersten Zahn 38 bei -60° (= 270° - 330°) liegt. Schließlich liegt der Winkelabstand zwischen dem in der FIG. 5 ganz links befindlichen zweiten Zahn 40 und dem unteren ersten Zahn 38 bei 60° (= 270° -210°), während der Winkelabstand zwischen diesem linken zweiten Zahn 40 und dem in der FIG. 5 ganz links befindlichen ersten Zahn 38 bei -30° (= 180° -210°) liegt.

Wenn nun beispielsweise - aufgrund einer Verdrehung der Lenksäule - der erste Polschuh 30 um -5° (in der FIG. 5 also im Uhrzeigersinn) gedreht wird, dann werden auch die genannten Winkelabstände zwischen den ersten und den zweiten Zähnen 38, 40 entsprechend um -5° geändert. Dadurch wird zum Beispiel der Winkel, unter dem das Magnetfeld B zwischen den beiden oberen Zähnen 38, 40 den zugeordneten oberen Sensor 34 durchsetzt, vergrößert, so daß dieser obere Sensor 34 ein dementsprechendes Meßsignal erzeugt. Gleichzeitig wird der Winkel, unter dem das Magnetfeld B zwischen den beiden rechten Zähnen 38, 40 den zugeordneten rechten Sensor 34 durchsetzt, verkleinert, so daß dieser rechte Sensor 34 ebenfalls ein dementsprechendes zweites Meßsignal erzeugt. Schließlich vergrößert sich auch noch der Winkel, unter dem das Magnetfeld B zwischen den beiden linken Zähnen 38, 40 den zugeordneten linken Sensor 34 durchsetzt, so daß dieser linke Sensor 34 ein dementsprechendes drittes Meßsignal erzeugt, wobei jedoch dieses dritte Meßsignal sich anders als das erste Meßsignal des oberen Sensors 34 ändert, da das erste Meßsignal vor der Verdrehung einen Winkelabstand von 0° und das dritte Meßsignal vor der Verdrehung einen Winkelabstand von -30° repräsentierte. Mit diesen drei Meßsignalen läßt sich der Torsionswinkel mit einer Genauigkeit ermitteln, die über der Genauigkeit liegt, die bei der Anordnung der Zähne gemäß dem Redundanz-Prinzip (vgl. die Ausführungsform der FIG. 1 und 2) möglich ist.

Die Magnetfelder B zwischen dem unteren ersten Zahn 38 und dem linken und rechten zweiten Zahn 40 wurden bei der vorstehenden Betrachtung vernachlässigt, da sie aufgrund der größeren Entfernung zwischen diesen Zähnen im Vergleich zu der Entfernung zwischen den beiden linken Zähnen 38, 40 bzw. den beiden rechten Zähnen 38, 40 verhältnismäßig schwach sind. Ihr Einfluß läßt sich jedoch durch eine geeignete Kalibrierung des Winkelmeßaufnehmers 20 ausgleichen.

### BEZUGSZEICHENLISTE

- 10: Lenksäule
- 12: Hilfskraftmotor
- 14: Lenkschaft
- 16: Drehstab
- 18: Lenkritzel
- 20: Torsionswinkel-Meßaufnehmer
- 22: erster Ringmagnet
- 24: zweiter Ringmagnet
- 26: erste Hülse
- 28: zweite Hülse
- 30: erster Polschuh
- 32: zweiter Polschuh
- 34: Magnetfeldsensor
- 36: Ringnut
- 38: erste Zähne
- 40: zweite Zähne
- 42: erster Stabmagnet
- 44: zweiter Stabmagnet
- A: Drehachse
- N: erster Pol
- S: zweiter Pol

## Patentansprüche

1. Meßaufnehmer (20) für den Torsionswinkel zwischen zwei um eine gemeinsame Achse (A) drehbaren Körpern (14, 18), mit:
- einem ersten Magneten (22, 42), der an dem ersten Körper (14) befestigt ist und mit einem ersten Pol (N) in radialem Abstand zu der Achse (A) liegt;
- einem zweiten Magneten (24, 44), der an dem zweiten Körper (18) befestigt ist und mit einem zweiten Pol (S), der entgegengesetzt zu dem ersten Pol (N) geladen ist, in radialem Abstand zu der Achse (A) liegt; und
- einem Magnetfeldsensor (34), der ebenfalls an dem zweiten Körper (18) befestigt und derart angeordnet ist, daß er das Magnetfeld, das zwischen den beiden Polen (N, S) verläuft, fühlen kann.

2. Meßaufnehmer nach Anspruch 1, dadurch gekennzeichnet, daß der Radialabstand des ersten Pols (N) im wesentlichen dem Radialabstand des zweiten Pols (S) gleicht, und daß die beiden Pole (N, S) in einem axialen Abstand zueinander angeordnet sind.

3. Meßaufnehmer nach Anspruch 2, dadurch gekennzeichnet, daß der Sensor (34) axial zwischen den beiden Polen (N, S) angeordnet ist.

4. Meßaufnehmer nach einem der vorhergehenden Ansprüche, dadurch gekennzeichnet, daß der Sensor (34) unmittelbar vor oder direkt auf dem zweiten Pol (S) angeordnet ist.

5. Meßaufnehmer nach einem der vorhergehenden Ansprüche, dadurch gekennzeichnet, daß:
- eine erste Hülse (26) an dem ersten Körper (14) befestigt ist und den ersten Magneten (22, 42) derart trägt, daß der erste Pol (N) an dem freien Ende der Hülse (26) liegt;
- eine zweite Hülse (28) an dem zweiten Körper (18) befestigt ist und den zweiten Magneten (24, 44) derart trägt, daß der zweite Pol (S) an dem freien Ende der Hülse (28) liegt; und
- die beiden Hülsen (26, 28) koaxial zu der Achse (A) angeordnet sind.

6. Meßaufnehmer nach einem der vorhergehenden Ansprüche, dadurch gekennzeichnet, daß:
- die beiden Magnete Ringmagnete (22, 24) sind, die koaxial zu der Achse (A) angeordnet sind;
- ein erster Polschuh (30) auf dem ersten Pol (N) und ein zweiter Polschuh (32) auf dem zweiten Pol (S) angeordnet ist, wobei jeder Polschuh (30, 32) wenigstens einen Zahn (38, 40) aufweist, der zu dem jeweils anderen Pol (S, N) hin vorspringt; und
- jeweils ein Sensor (34) unmittelbar vor oder direkt auf jedem Zahn (40) des zweiten Polschuhs (32) angeordnet ist.

7. Meßaufnehmer nach Anspruch 6, dadurch gekennzeichnet, daß jeder Polschuh (30, 32) zu seinem Ringmagneten (22, 24) passend ringförmig ausgebildet und koaxial zu diesem angeordnet ist.

8. Meßaufnehmer nach Anspruch 7, dadurch gekennzeichnet, daß die beiden Polschuhe (30, 32) im wesentlichen den gleichen Durchmesser aufweisen und in einem axialen Abstand einander gegenüberliegen.

9. Meßaufnehmer nach Anspruch 8, dadurch gekennzeichnet, daß sich die Zähne (38, 40) im wesentlichen in axialer Richtung erstrecken.

10. Meßaufnehmer nach Anspruch 7, dadurch gekennzeichnet, daß die beiden Polschuhe (30, 32) unterschiedliche Durchmesser aufweisen und im wesentlichen ohne axialen, aber in einem radialen Abstand einander gegenüberliegen.

11. Meßaufnehmer nach Anspruch 10, dadurch gekennzeichnet, daß sich die Zähne (38, 40) im wesentlichen in radialer Richtung erstrecken.

12. Meßaufnehmer nach einem der Ansprüche 6 bis 11, dadurch gekennzeichnet, daß die beiden Polschuhe (30, 32) die gleiche Anzahl an Zähnen (38, 40) aufweisen, und daß bei jedem Polschuh (30, 32) die Zähne (38, 40) in gleichen Winkelabständen um die Achse (A) herum verteilt sind.

13. Meßaufnehmer nach einem der Ansprüche 6 bis 11, dadurch gekennzeichnet, daß die Anzahl an Zähnen (38) des ersten Polschuhs (30) sich um eins von der Anzahl an Zähnen (40) des zweiten Polschuhs (32) unterscheidet, und daß bei jedem Polschuh (30, 32) die Zähne (38, 40) in gleichen Winkelabständen um die Achse (A) herum verteilt sind.

14. Meßaufnehmer nach einem der vorhergehenden Ansprüche, dadurch gekennzeichnet, daß der Sensor (34) einen Hall-Generator aufweist.

15. Meßaufnehmer nach einem der vorhergehenden Ansprüche, dadurch gekennzeichnet, daß der Sensor (34) einen Magnetowiderstand umfaßt.

16. Meßaufnehmer nach Anspruch 15, dadurch gekennzeichnet, daß der Sensor (34) eine Feldplatte umfaßt.

17. Meßaufnehmer nach Anspruch 15, dadurch gekennzeichnet, daß der Sensor (34) eine anisotrop magnetoresistive Dünnschicht aufweist.

18. Meßaufnehmer nach einem der vorhergehenden Ansprüche, dadurch gekennzeichnet, daß die Magnete (22, 24, 42, 44) Permanetmagnete sind.

19. Lenksäule (10), mit:
- einem Lenkschaft (14) zur Befestigung an einem Lenkrad;
- einem Lenkritzel (18), das mit dem Lenkschaft (14) verbunden ist; und
- einem Meßaufnehmer (20) für den Torsionswinkel der Lenksäule (10) nach einem der vorhergehenden Ansprüche, wobei der erste Körper der Lenkschaft (14) und der zweite Körper das Lenkritzel (18) ist.

20. Lenksäule nach Anspruch 19, dadurch gekennzeichnet, daß der Lenkschaft (14) über eine Torsionsfeder (16) mit dem Lenkritzel (18) verbunden ist.

21. Lenksäule nach Anspruch 20, dadurch gekennzeichnet, daß die Torsionsfeder ein Drehstab (16) ist.
